# EUROPÄISCHE PATENTSCHRIFT

(11) **EP 3 317 134 B1**
(45) Veröffentlichungstag und Bekanntmachung des Hinweises auf die Patenterteilung: **12.01.2022**
(21) Anmeldenummer: 16734381.3
(22) Anmeldetag: 01.07.2016
(51) Int. Cl.: B60K 15/03, B60S 1/50, B60S 1/48, H05B 3/00

(54) **AUFTAUVORRICHTUNG FÜR BETRIEBSFLÜSSIGKEITSBEHÄLTER**
THAWING DEVICE FOR OPERATING FLUID CONTAINERS
DISPOSITIF DE DÉCONGÉLATION POUR RÉSERVOIR DE LIQUIDE FONCTIONNEL

(30) Priorität: 03.07.2015 DE 102015212524; 03.07.2015 DE 102015017122
(43) Veröffentlichungstag der Anmeldung: 09.05.2018
(73) Patentinhaber: Kautex Textron GmbH & Co. KG, 53229 Bonn (DE)
(72) Erfinder: SCHUMACHER, Nicolai, 53227 Bonn (DE)
(74) Vertreter: Richly & Ritschel Patentanwälte PartG mbB
(86) Internationale Anmeldenummer: PCT/EP2016/065607
(87) Internationale Veröffentlichungsnummer: WO 2017/005662

(56) Entgegenhaltungen:
- EP-A1- 1 473 447
- EP-A1- 1 653 778
- WO-A1-2014/147138
- AT-A4- 508 359
- DE-A1- 3 705 639
- DE-A1-102004 019 715
- DE-A1-102009 041 719
- DE-U1-202006 010 615
- US-A1- 2003 226 596
- US-A1- 2010 230 415

## Beschreibung

Die vorliegende Erfindung betrifft einen Betriebsflüssigkeitsbehälter, aufweisend eine Heizeinrichtung, zur Bevorratung von Betriebsflüssigkeiten, welche die Tendenz aufweisen, bei niedrigen Umgebungstemperaturen einzufrieren.

Ein Betriebsflüssigkeitsbehälter kann vorzugsweise ein Flüssigkeitsbehälter für eine wässrige Harnstofflösung sein, die für ein SCR-Verfahren (Selectiv Catalytic Reduction) benötigt wird, um bei Dieselfahrzeugen die Stickoxydemission zu senken. Diese wässrige Harnstofflösung wird von dem SCR-Katalysator in den Abgasstrang, zum Beispiel mittels einer Dosierpumpe oder eines Injektors, eingespritzt. Solche bei Kraftfahrzeugen verwendete Harnstofflösungen weisen in der Regel die Tendenz auf, bei Temperaturen unterhalb von ungefähr -11 °C einzufrieren. Der Betriebsflüssigkeitsbehälter kann jedoch auch ein Kraftstofftank, insbesondere ein Kraftstofftank für Dieselkraftstoffe sein, da Dieselkraftstoff ebenfalls bei niedrigen Temperaturen einfrieren kann. Ein weiteres Beispiel für einen Betriebsflüssigkeitsbehälter ist ein Behälter für Scheibenwischwasser.

Im Folgenden wird auf einen Betriebsflüssigkeitsbehälter für wässrige Harnstofflösungen Bezug genommen, wobei sämtliche Ausführungen entsprechend allgemein für jeden Betriebsflüssigkeitsbehälter anwendbar sind. Diese Betriebsflüssigkeitsbehälter können auch für Kraftstoffe oder für Wasser sein. Wasser wird z.B. für die Wassereinspritzung bei aufgeladenen Turbomotoren oder für die Waschanlagen der Windschutzscheiben und Scheinwerfer benötigt.

Bei Umgebungstemperaturen, die unter dem Gefrierpunkt der Betriebsflüssigkeiten liegen, frieren diese ein und müssen für einen ordnungsgemäßen Betrieb des Fahrzeugs möglichst innerhalb einer kurzen Zeit nach dem Start des Fahrzeugs aufgetaut werden. Zu diesem Zweck werden im Stand der Technik elektrisch betriebene Heizungen verwendet, die in den Betriebsflüssigkeitsbehältern angeordnet sind und zum Auftauen der Betriebsflüssigkeit verwendet werden. Insbesondere bei großen Behältern, sehr kalten Umgebungstemperaturen (Kaltländer) und/oder kurzen Betriebsdauern des Fahrzeugs (WDC = Work Drive Cycle) sind solche im Betriebsflüssigkeitsbehälter integrierte Heizungen überfordert. Hinzu kommt nachteilhafterweise, dass solche im Betriebsflüssigkeitsbehälter angeordnete Heizeinrichtungen zum einen beständig gegenüber der Betriebsflüssigkeit sein müssen, zum anderen auch mit Schutzmaßnahmen versehen werden müssen, die sie beispielsweise gegen den Eisdruck der gefrorenen Betriebsflüssigkeit oder gegen die kinetische Energie der in den Betriebsflüssigkeitsbehälter eingefüllten Betriebsflüssigkeit oder des dort vorhandenen Eises beim Betanken schützt. Gleiches, insbesondere hinsichtlich der Beständigkeit gegenüber der Betriebsflüssigkeit, gilt ebenfalls für die Konnektierung der Heizeinrichtung, d. h. beispielsweise der Kabel und Stecker, die z. B. mit Kriechsperren versehen werden müssen. Ein weiterer Nachteil der im Stand der Technik bekannten Heizeinrichtungen liegt darin, dass diese in der Regel mit dem im Betriebsflüssigkeitsbehälter angeordneten Fördermodul verbunden sind und/oder mit diesem gemeinsam geregelt werden.

Die EP 1 473 447 A1 beschreibt einen beheizten Flüssigkeitsbehälter für Kraftfahrzeuge. Die DE 10 2004 019 715 A1 beschreibt einen beheizten Kraftstoffbehälter für Verbrennungsmotoren, der eine Heizvorrichtung in Form einer Heizscheibe aufweist. Die EP 1 653 778 A1 beschreibt eine Heizfolie mit PTC-Effekt. Die DE 10 2009 041 719 A1 beschreibt einen mit einer Heizfolie beheizten SCR-Tank.

Der vorliegenden Erfindung liegt die Aufgabe zugrunde, einen verbesserten Betriebsflüssigkeitsbehälter bereitzustellen, der ein verlässliches, kostengünstiges und schnelles Auftauen der Betriebsflüssigkeit ermöglicht. Ein weiterer Anwendungsfall kann bei Wasserbehältern das Verhindern von Bio-Kontamination (z.B. durch Algenbildung) sein, indem das Medium zeitweise auf Temperaturen von über 70 °C erhitzt wird.

Diese Aufgabe wird erfindungsgemäß durch einen Betriebsflüssigkeitsbehälter mit den in Anspruch 1 angegebenen Merkmalen gelöst. Vorteilhafte Ausgestaltungen sind in dessen Unteransprüchen angegeben.

Der Betriebsflüssigkeitsbehälter der vorliegenden Erfindung weist zumindest eine Komponente auf, die ausgewählt ist aus der Gruppe umfassend eine Förderpumpe, eine Filtereinrichtung, einen Qualitätssensor und/oder einen Füllstandsgeber. Zudem weist der Betriebsflüssigkeitsbehälter zumindest eine folienförmige Heizeinrichtung und einen Kaltleiter auf, wobei diese Heizeinrichtung außerhalb des Betriebsflüssigkeitsbehälters an der Wandung des Betriebsflüssigkeitsbehälters angeordnet ist und zumindest teilweise von einem Schaum als Isolationsschicht bedeckt ist und/oder innerhalb der Wandung des Betriebsflüssigkeitsbehälters angeordnet ist.

Einer der Kerngedanken der vorliegenden Erfindung liegt damit darin, die Heizeinrichtung nicht in Kontakt mit der Betriebsflüssigkeit kommen zu lassen, wodurch diese vorteilhafterweise zum einen nicht beständig gegenüber dieser Betriebsflüssigkeit zu sein braucht, noch gegen mechanische Belastungen abgesichert werden muss, wie dies beispielsweise durch den Eisdruck der gefrorenen Betriebsflüssigkeit oder das Aufprallen der Betriebsflüssigkeit auf die Heizeinrichtung beim Befüllen des Betriebsflüssigkeitsbehälters auftreten kann.

Bei der Förderpumpe des erfindungsgemäßen Betriebsflüssigkeitsbehälters handelt es sich um eine Förderpumpe, die zum Fördern der Betriebsflüssigkeit geeignet ist. Bevorzugt wird hierbei die Betriebsflüssigkeit mittels einer zumindest teilweise innerhalb des Betriebsflüssigkeitsbehälters angeordneten Förderleitung aus dem Betriebsflüssigkeitsbehälter gepumpt. Weiter bevorzugt wird, falls es sich bei der Betriebsflüssigkeit um eine wässrige Harnstofflösung handelt, diese über die Förderleitung mittels einer Injektionseinrichtung dem Abgasstrang eines Kraftfahrzeugs zugeführt.

Die Filtereinrichtung der vorliegenden Erfindung weist vorzugsweise ein Filterelement auf und dient der Filterung der zu fördernden Betriebsflüssigkeit.

Unter einem Qualitätssensor im Sinne der Erfindung ist ein Sensor zu verstehen, mit dem bevorzugt eine Fehlbefüllung des Betriebsflüssigkeitsbehälters detektierbar ist. Die Detektion der korrekt eingefüllten Betriebsflüssigkeit kann über verschiedenste physikalische Parameter der Betriebsflüssigkeit erfolgen, beispielsweise über eine Dichtemessung oder über Leitfähigkeitsmessung der eingefüllten Betriebsflüssigkeit.

Als Füllstandsgeber kann beispielsweise ein Ultraschallsensor Verwendung finden, der bevorzugt so innerhalb des Betriebsflüssigkeitsbehälters platziert wird, so dass dieser an der Stelle des höchstmöglichen Flüssigkeitsstandes der Betriebsflüssigkeit angeordnet wird. Als Füllstandsgeber kann jedoch beispielsweise auch eine sogenannte Kombi-Sensor-Einheit vorgesehen sein, die sowohl einen (Ultraschall-) Füllstandssensor als auch einen Dichtesensor als Qualitätssensor umfasst. Der Dichtesensor dient dazu, die korrekte Konzentration der wässrigen Harnstofflösung im Betriebsflüssigkeitsbehälter zu gewährleisten bzw. eine von der Norm abweichende Konzentration zu detektieren.

Die Komponenten ausgewählt aus der Gruppe umfassend eine Förderpumpe, eine Filtereinrichtung, einen Qualitätssensor und/oder einen Füllstandsgeber lassen sich im Sinne der vorliegenden Erfindung frei miteinander kombinieren. Vorteilhafterweise sind jedoch einzelne, mehrere oder alle dieser Komponenten im Betriebsflüssigkeitsbehälter angeordnet. Noch bevorzugter sind einzelne, mehrere, oder alle dieser Komponenten in einem Modulgehäuse angeordnet, über das die Komponente von außen und durch eine Öffnung im Boden des Betriebsflüssigkeitsbehälters austauschbar eingesetzt werden kann. Noch bevorzugter ist ein solches Modulgehäuse mit dem Boden des Betriebsflüssigkeitsbehälters auf der Innenseite dieses Behälters flüssigkeitsdicht verbunden. Solche in einem Modulgehäuse angeordnete Komponenten können auch als Fördermodul bezeichnet werden.

Der Betriebsflüssigkeitsbehälter weist weiterhin ein Vorratsvolumen zur Bevorratung der Betriebsflüssigkeit auf, das durch die Wandung des Betriebsflüssigkeitsbehälters begrenzt wird. Die Wandung des Betriebsflüssigkeitsbehälters weist zwei Seiten bzw. Oberflächen auf, wobei diejenige Seite bzw. Oberfläche, die in Kontakt mit der Betriebsflüssigkeit stehen kann, als Innenseite bzw. innere Oberfläche bezeichnet wird, während diejenige Seite bzw. Oberfläche, die nach Befüllung des Behälters nicht in Kontakt mit der Betriebsflüssigkeit steht, als Außenseite bzw. äußere Oberfläche des Betriebsflüssigkeitsbehälters bezeichnet wird. Weiterhin beziehen sich vorzugsweise alle Angaben zur Richtung bzw. Ausrichtung in Bezug auf den Betriebsflüssigkeitsbehälter (z. B. der "Boden", bzw. "Behälterboden", oder die "tiefste Stelle") auf einen ordnungsgemäß in ein Kraftfahrzeug verbauten Betriebsflüssigkeitsbehälter und dessen so gegebene räumliche Anordnung.

Der Betriebsflüssigkeitsbehälter gemäß der vorliegenden Erfindung weist weiterhin eine Heizeinrichtung auf, die außerhalb des Betriebsflüssigkeitsbehälters an der Wandung des Betriebsflüssigkeitsbehälters und/oder innerhalb der Wandung des Betriebsflüssigkeitsbehälters angeordnet ist. Damit ist die Heizeinrichtung an der Außenseite bzw. der äußeren Oberfläche der Wandung des Betriebsflüssigkeitsbehälters angeordnet und/oder zwischen der Außenseite und der Innenseite bzw. zwischen der äußeren Oberfläche und der inneren Oberfläche des Betriebsflüssigkeitsbehälters angeordnet. Vorzugsweise ist die Heizeinrichtung an der Außenseite bzw. der äußeren Oberfläche der Wandung des Betriebsflüssigkeitsbehälters angeordnet, da hierdurch eine besonders leicht umzusetzende Anbringung ermöglicht wird.

Für den Fall, dass die Heizeinrichtung außerhalb des Betriebsflüssigkeitsbehälters an der Wandung desselben angeordnet ist, ist diese vorzugsweise direkt an dieser angebracht. In anderen kontaktiert die Oberfläche der Heizeinrichtung die äußere Oberfläche des Betriebsflüssigkeitsbehälters. Hierunter soll verstanden werden, dass Heizeinrichtung und äußere Oberfläche des Betriebsflüssigkeitsbehälters so in Kontakt miteinander stehen, dass ein Wärmefluss zwischen Heizeinrichtung und Oberfläche gegeben ist. Dies schließt nicht aus, dass zwischen Heizeinrichtung und äußerer Oberfläche des Betriebsflüssigkeitsbehälters eine dazwischenliegenden Haftvermittlungsschicht, wie beispielsweise einem Klebstoff oder einem Kunststoff, angeordnet ist. Weiter vorzugsweise ist die Heizeinrichtung stoffschlüssig mit der Wandung des Betriebsflüssigkeitsbehälters verbunden, beispielsweise durch Verklebung.

Der Betriebsflüssigkeitsbehälter kann aus thermoplastischem Kunststoff ausgebildet sein. Vorzugweise wird dieser im Spritzgussverfahren oder durch ein Blasformverfahren hergestellt. Vorzugsweise ist die Wandung des Betriebsflüssigkeitsbehälters mehrschichtig ausgeführt, d. h. sie weist zumindest zwei thermoplastische Kunststoffschichten auf. In einem solchen Fall kann die Heizeinrichtung bevorzugt zwischen zwei solchen thermoplastischen Kunststoffschichten - und damit innerhalb der Wandung des Betriebsflüssigkeitsbehälters - angeordnet werden.

Vorzugsweise handelt es sich bei dem Betriebsflüssigkeitsbehälter um einen Betriebsflüssigkeitsbehälter für Fahrzeuge, weiter bevorzugt für Kraftfahrzeuge.

Die Heizeinrichtung der vorliegenden Erfindung ist bevorzugt eine Heizeinrichtung zur Bereitstellung wenigstens einer eisfreien Teilmenge der Betriebsflüssigkeit, weiter bevorzugt zur Bereitstellung wenigstens einer eisfreien Teilmenge und weiter bevorzugt zur Bereitstellung wenigstens einer eisfreien Teilmenge der Betriebsflüssigkeit bei niedrigen Umgebungstemperaturen. Insbesondere liegen diese niedrigen Umgebungstemperaturen bevorzugt in einem Temperaturbereich von ≤ -10°C.

Die Heizeinrichtung kann an jeder geeigneten Stelle an oder innerhalb der Wandung des Betriebsflüssigkeitsbehälters angeordnet sein, die das Auftauen der Betriebsflüssigkeit ermöglicht oder dazu führt, dass diese trotz niedriger Umgebungstemperaturen in einem flüssigen Aggregatzustand bleibt. Bevorzugt ist die Heizeinrichtung im Bereich des Bodens des Betriebsflüssigkeitsbehälters angeordnet. Hierunter soll die untere Hälfte, das untere Drittel, oder bevorzugt das untere Viertel des Betriebsflüssigkeitsbehälters verstanden werden.

Noch bevorzugter ist die Heizeinrichtung in einem Bereich nahe oder an der tiefsten Stelle des Betriebsflüssigkeitsbehälters angeordnet. Dies hat den Vorteil, dass die eingefrorene Betriebsflüssigkeit bevorzugt an der Stelle aufgetaut wird, an der sie in der Regel auch aus dem Betriebsflüssigkeitsbehälter entnommen wird. In einer besonders bevorzugten Ausführungsform der vorliegenden Erfindung ist das Heizelement nahe, oder an der Öffnung im Boden des Betriebsflüssigkeitsbehälters angeordnet, durch welche die Betriebsflüssigkeit entnommen wird. Bevorzugt weist der Betriebsflüssigkeitsbehälter eine Öffnung im Bereich seines Bodens auf durch den die Betriebsflüssigkeit entnommen werden kann. Noch bevorzugter ist diese Öffnung im unteren Viertel und/oder im Bereich der - oder bevorzugt an der - tiefsten Stelle des Betriebsflüssigkeitsbehälters angeordnet.

Besonders vorteilhaft kann die Heizeinrichtung an einer anderen Stelle als im Bereich der Öffnung des Betriebsflüssigkeitsbehälters bzw. des Fördermoduls angeordnet sein. Dies kann bedeuten, dass die Heizeinrichtung nicht an der tiefsten Stelle des Betriebsflüssigkeitsbehälters angeordnet ist. Hierdurch wird gewährleistet, dass ein Auftauen auch an weiteren Stellen als an dem Modul erfolgt, was zu einem verbesserten Auftauverhalten führt. Weiterhin ist eine solche Anordnung insbesondere bei Einfrieren in Schräglage des Fahrzeugs von Vorteil. Es sind jedoch auch Kombinationen denkbar und bevorzugt, an der die Heizeinrichtung sowohl im Bereich der Öffnung des Betriebsflüssigkeitsbehälters als auch an einer weiteren, davon entfernten Stelle angeordnet ist. Hierzu eignet sich insbesondere eine Folienförmige Heizeinrichtung, die großflächig an dem Betriebsflüssigkeitsbehälter angebracht werden kann.

Die Heizeinrichtung ist nicht Teil des Fördermoduls, wie im Stand der Technik bekannt. Sie kann jedoch vorzugsweise zusätzlich zu einem solchen Fördermodul mit integriertem Heizelement verbaut sein. Dies hat den Vorteil, dass eingefrorene Betriebsflüssigkeit auch an einer anderen Stelle, als der Position des Fördermoduls - welches im Regelfall an der tiefsten Stelle des Betriebsflüssigkeitsbehälters angeordnet ist - aufgetaut werden kann. Besonders vorteilhaft ist dies bei einem Einfrieren der Betriebsflüssigkeit in Schräglage des Kraftfahrzeugs.

Die Heizeinrichtung der vorliegenden Erfindung kann jegliche geeignete Form aufweisen. Bevorzugt ist die Heizeinrichtung flexibel ausgeführt. Die Heizeinrichtung ist folienförmig ausgeführt. Hierunter soll verstanden werden, dass die Heizeinrichtung aus zumindest einer Schicht aufgebaut ist, die vorzugsweise flexibel ist. Hierdurch wird vorteilhafterweise gewährleistet, dass die Heizeinrichtung die Wandung des Betriebsflüssigkeitsbehälters auch dann sehr effizient und über eine möglichst große Fläche kontaktieren kann, wenn dieser eine Kontur aufweist. In anderen Worten führt eine folienförmige und/oder flexible Ausführung der Heizeinrichtung dazu, dass sich diese auf einfache Art und Weise an eine vorgegebene Form des Betriebsflüssigkeitsbehälters anpasst und an der Wandung des Betriebsflüssigkeitsbehälters und/oder innerhalb der Wandung des Betriebsflüssigkeitsbehälters angeordnet werden kann. Ganz besonders bevorzugt ist die Heizeinrichtung auf die äußere Oberfläche der Wandung des Betriebsflüssigkeitsbehälters aufgebracht, weiter bevorzugt durch Aufkleben, insbesondere über eine Haftvermittlerschicht. Noch weiter bevorzugt weist die Heizeinrichtung hierbei eine im Weiteren genauer beschriebene Isolationsschicht auf, die die Heizeinrichtung zumindest teilweise, bevorzugt vollständig, überdeckt.

Eine folienförmige Heizeinrichtung der vorliegenden Erfindung besteht bevorzugt aus zumindest drei Schichten. Die erste Schicht, im Folgenden als Substratschicht bezeichnet, dient als Trägerschicht und zum Aufbringen der Heizeinrichtung auf die Wandung des Betriebsflüssigkeitsbehälters. Diese Substratschicht besteht bevorzugt aus einem Polyimid (PI), Polypropylen (PP), Polyethylenterephthalat (PET), Polyethylennaphthalat (PEN) und/oder einem Flüssigkristallpolymer. Besonders bevorzugt besteht die Substratschicht aus einem Polyethylennaphthalat (PEN).

Weiter bevorzugt weist die Substratschicht eine Schichtdicke von ungefähr 25 bis 100 µm, weiter bevorzugt von 25 bis 50 µm auf. Die zweite, über der ersten Schicht der folienförmigen Heizeinrichtung angeordnete Schicht wird als Heizpolymerschicht bezeichnet. Diese führt bei Anlegen einer elektrischen Spannung zu einer Wärmeentwicklung, bevorzugt durch das Aussenden von infraroter Strahlung. Die Heizpolymerschicht weist bevorzugt eine Schichtdicke von 5 bis 50 µm, noch bevorzugter von ungefähr 20 µm auf.

Bei dem Heizpolymerhandelt handelt es sich bevorzugt um ein Polymer auf Kohlenstoffbasis, insbesondere um einen Kohlenstofflack, der auch als Carbonlack bezeichnet werden kann. Bevorzugt handelt es sich bei dem Heizpolymer um eine elektrisch leitfähige Tinte (*conductive ink*)*.* Die Verwendung eines Lackes und/oder einer Tinte hat die Vorteile, dass Mischungen verschiedener Heizpolymere leicht hergestellt werden können und das Heizpolymer mit geringer und gleichmäßiger Schichtdicke aufgebracht und/oder - bevorzugt unter Ausbildung von Strukturen - aufgedruckt, werden kann. Carbonlacke dieser Art sind dem Fachmann hinlänglich bekannt. Weiter bevorzugt weist das Heizpolymer einen PTC-Effekt auf, d.h. es handelt sich um einen Kaltleiter. Weiter bevorzugt handelt es sich bei dem Heizpolymer um ein Heizpolymer mit nichtlinearem Widerstandsverlauf. Noch bevorzugter weist das Heizpolymer bei einer bestimmten Temperatur einen PTC-Knick auf. Dieser entspricht einer Grenztemperatur. Bis zum Erreichen dieser Grenztemperatur verläuft der Widerstand im Wesentlichen linear zur Temperatur. Ab Erreichen der Grenztemperatur, d.h. mit Erreichen des PTC-Knicks - nimmt der Widerstand mit steigender Temperatur für einen bestimmten Temperaturbereich deutlich stärker als bisher zu. In anderen Worten verläuft der Widerstand im Wesentlichen exponentiell zur Temperatur. Ab dem Erreichen der Grenztemperatur, d.h. ab dem / am PTC-Knick nimmt der Widerstand bevorzugt pro °C Temperaturerhöhung um einen Faktor ≥ 5 und ≤ 10 stärker zu, als vor dem Erreichen dieser Grenztemperatur. Dies dient in der vorliegenden Erfindung vorteilhafterweise als Selbstschutz ohne das eine Regelelektronik notwendig ist.

Besonders bevorzugt liegt der PTC-Knick in einem Bereich von ≥ 50 °C und ≤ 120 °C. Hierdurch wird vorteilhafterweise ein sicheres und automatisches Abschalten des Heizelements gewährleistet.

Weiter bevorzugt handelt es sich bei dem Heizpolymer um eine Mischung, d.h. eine Heizpolymermischung, zumindest zweier Heizpolymere wie Carbonlacke bzw. elektrisch leitfähiger Tinten. Noch bevorzugter um Heizpolymere mit unterschiedlichen PTC-Knicken. Überraschenderweise führte eine solche Kombination von zumindest zwei Heizpolymeren zur Ausbildung einer Widerstandskurve mit zumindest 2 PTC-Knicken. Hierdurch wird vorteilhafterweise eine Aufspreizung des Temperaturbereichs gewährleistet in welcher der elektrische Widerstand des Heizpolymers, bzw. der Mischung der zumindest zwei Heizpolymeren, mit weiter zunehmender Temperatur abnimmt. Bei der Mischung handelt es sich bevorzugt um eine Mischung der vermischten Heizpolymere zu gleichen Teilen. Bei Verwendung von zwei Heizpolymeren in der Mischung liegen diese damit bevorzugt in einem 1:1 Mengenverhältnis vor.

Ganz besonders bevorzugt hat das erste der zumindest zwei vermischten Heizpolymere einen PTC-Knick bei ungefähr 60 °C und das zweite der zumindest zwei Heizpolymere einen PTC-Knick von > 60 ° C und ≤ 100 °C, bevorzugt bei ungefähr 80 °C. Die hieraus bestehende Heizpolymermischung weist weiter bevorzugt zwei PTC-Knicke auf, wobei der erste PTC-Knick bei ungefähr 60 °C liegt und der zweite PTC-Knick bei > 60 ° C und ≤ 100 °C, bevorzugt bei ungefähr 80 °C.

Als dritte Schicht der folienförmigen Heizeinrichtung, die wiederum über der Heizpolymerschicht angeordnet ist, ist eine Schutzschicht vorgesehen. Diese weist bevorzugt eine Schichtdicke von 15 bis 50 µm auf. Die Schutzschicht besteht bevorzugt aus einem Polyimid (PI), Polypropylen (PP), Polyethylenterephthalat (PET), Polyethylennaphthalat (PEN) und/oder einem Flüssigkristallpolymer. Besonders bevorzugt besteht die Schutzschicht aus einem Polyethylennaphthalat (PEN). Noch bevorzugter besteht die Schutzschicht aus demselben Material wie die Substratschicht.

Die folienförmige Heizeinrichtung der vorliegenden Erfindung kann weiterhin zusätzliche Schichten, wie z. B. Haftvermittlungsschichten, enthalten auf die weiter unten eingegangen wird.

Bevorzugt weist die folienförmige Heizeinrichtung zwischen Schutzschicht und Substratschicht eine oder mehrere Elektroden auf, welche die Heizpolymerschicht elektrisch kontaktieren. Diese Elektroden sind bevorzugt metallische Elektroden, weiter bevorzugt bestehen sie aus Kupfer oder Silber. Beide Elemente zeichnen sich durch eine leichte Verarbeitbarkeit und einen geringen elektrischen Widerstand aus. Am bevorzugtesten besteht oder bestehen die Elektrode(n) aus Kupfer. Die Elektroden können bevorzugt mittels eines Druck- und/oder Ätzverfahrens auf die Substratschicht aufgebracht worden sein.

Weiter bevorzugt kontaktieren die Elektroden die Heizpolymerschicht auf einer Seite oder auf beiden Seiten (Durchkontaktierung). Die Durchkontaktierung hat neben einer verbesserten Kontaktierung der Substratschicht den weiteren Vorteil, dass die erfindungsgemäße Heizfolie nach ihrer Herstellung und insbesondere vor Anbringung auf den erfindungsgemäßen Betriebsflüssigkeitsbehälter konfektioniert werden kann.

Die folienförmige Heizeinrichtung der vorliegenden Erfindung kann auch als gekapselte folienförmige Heizeinrichtung bezeichnet werden, da die eigentliche Heizpolymerschicht auf der einen Seite durch eine Substratschicht und auf der anderen Seite durch die Schutzschicht gekapselt vorliegt, und somit vorteilhafterweise vor Umwelteinflüssen geschützt ist. Wie bereits zuvor ausgeführt, wird in einer besonders bevorzugten Ausführungsform der Erfindung eine solche flexible folienförmige Heizeinrichtung stoffschlüssig, d. h. zum Beispiel mittels Verklebung oder Verschweißung mit der Außenwand des Betriebsflüssigkeitsbehälters verbunden.

Besonders bevorzugt wird die erfindungsgemäße folienförmige Heizvorrichtung mittels einer Haftvermittlungsschicht, bevorzugt mittels eines Klebebandes auf die außenliegende Oberfläche des Betriebsflüssigkeitsbehälters aufgebracht. Weiter bevorzugt handelt es sich bei dem Klebeband um ein beidseitig klebendes Klebeband. Noch weiter bevorzugt weist das Klebeband eine Schichtdicke von ≤ 200 µm auf und/oder das Klebeband ist ein einschichtiges Klebeband. Beides hat den Vorteil, dass ein ausreichender Wärmetransfer von Heizeinrichtung zu Betriebsflüssigkeitsbehälterwand gewährleistet bleibt. Während jedes dem Fachmann bekannte und geeignete Klebeband Verwendung finden kann, wird ein Klebeband auf Acrylatbasis bevorzugt. Ganz besonders bevorzugt handelt es sich bei dem Klebeband um ein Transferklebeband.

Das Klebeband weist weiter bevorzugt und zumindest auf der der (später) der Wand des Betriebsflüssigkeitsbehälters zugewandten Seite einen druckempfindlichen Klebstoff auf. Hierdurch wird vorteilhafterweise ein leichtes Anbringen der folienförmigen Heizvorrichtung, z.B. durch simples Andrücken, an den Betriebsflüssigkeitsbehälter gewährleistet.

Noch weiter bevorzugt ist zwischen dem Klebeband und der Substratschicht noch eine Wärmeleitschicht, insbesondere eine Metallschicht, bevorzugt eine Metallfolie angeordnet. Besonders bevorzugt besteht die Wärmeleitschicht aus Aluminium oder Kupfer. Eine solche Wärmeleitschicht verbessert unter anderem den Wärmetransfer von Heizeinrichtung zu Betriebsflüssigkeitsbehälter.

Der Betriebsflüssigkeitsbehälter weist zumindest eine Isolationsschicht, noch bevorzugter eine thermische Isolationsschicht auf. Hierdurch wird vorteilhaft gewährleistet, dass die durch die Heizeinrichtung erzeugte Wärme nicht an die Umgebung, sondern vorrangig an den Betriebsflüssigkeitsbehälter und damit an die eingefrorene Betriebsflüssigkeit abgegeben wird, wodurch ein effizienterer Betrieb der Heizeinrichtung gewährleistet ist.

Erfindungsgemäß handelt es sich bei der Isolationsschicht um einen Schaum (der auch als Schaumstoff bezeichnet werden kann), bevorzugt einen Kunststoffschaum. Besonders bevorzugt handelt es sich bei dem Kunststoffschaum um einem Polyethylen, einen Ethylen-Propylen-Dien-Kautschuk- und/oder einen Polyurethanschaum (PE-Schaum, EPDM- bzw. PU-Schaum). Verfahren zum Aufschäumen, insbesondere von Kunststoffen, sind dem Fachmann bekannt. Die Verwendung eines Schaums als Isolationsschicht hat den Vorteil, dass diese in einfacher Weise aufgetragen werden kann und sich weiterhin leicht an die Formgebung des Betriebsflüsigkeitsbehälters anpasst. Weiter bevorzugt handelt es sich bei dem Schaum um einen geschlossenzelligen Schaum. Dies hat den weiteren Vorteil, dass eine geringe Wasseraufnahme durch den Schaum erfolgt. Die Isolationsschicht, insbesondere bei Vorliegen als Schaum, weist bevorzugt eine Dicke von ≥ 2 mm und ≤ 12 mm, bevorzugter ≥ 4 mm und ≤ 8 mm, noch bevorzugter von ungefähr 6 mm, ungefähr 7 mm oder ungefähr 8 mm auf.

Bevorzugt ist die Isolationsschicht die äußerste Schicht des Betriebsflüssigkeitsbehälters der vorliegenden Erfindung. Weiter vorzugsweise ist diese über der Heizeinrichtung angebracht und/oder bedeckt diese zumindest teilweise. Beispielsweise und besonders bevorzugt kann die Isolationsschicht auf die Schutzschicht der folienförmigen Heizeinrichtung aufgebracht sein, insbesondere dann, wenn die folienförmige Heizvorrichtung an der äußeren Oberfläche des Betriebsflüssigkeitsbehälters angebracht ist. Insbesondere, aber nicht ausschließlich für den Fall, dass die Heizeinrichtung in der Wandung des Betriebsflüssigkeitsbehälters angeordnet ist, kann die Isolationsschicht auch auf die äußere Oberfläche des Betriebsflüssigkeitsbehälters angebracht werden, bevorzugt wird sie hierbei - zumindest teilweise - oberhalb der Heizeinrichtung angebracht. Hiermit ist gemeint, dass die Isolationsschicht in einem Bereich der äußeren Oberfläche der Wandung des Behälters angebracht wird, in welchem auch die Heizeinrichtung angeordnet ist. Als bevorzugte Isolationsschichten im Sinne der Erfindung kommen insbesondere PU- und/oder PE-Schaum in Betracht.

Die Isolationsschicht ist weiter bevorzugt auf der von der Betriebsflüssigkeitsbehälter wegweisenden Oberfläche, d.h. auf ihrer Außenseite - zumindest teilweise - von einer Metallfolie bedeckt. In anderen Worten umfasst die Isolationsschicht, insbesondere bei Vorliegen als Schaumschicht, bevorzugt eine Metallfolie als äußerste Schicht. Dies hat die weiteren Vorteile einer verbesserten Wärmeisolierung als auch einer verbesserten Beständigkeit der Isolationsschicht gegenüber Umwelteinflüssen. In anderen Worten ist die Isolationsschicht bevorzugt mit einer Metallfolie kaschiert. Besonders bevorzugt handelt es sich bei dieser Metallfolie um eine Aluminiumfolie.

Besonders bevorzugt wird die erfindungsgemäße Isolationsschicht mittels einer Haftvermittlungsschicht, bevorzugt mittels eines Klebebandes auf die Heizpolymerschicht des Betriebsflüssigkeitsbehälters aufgebracht. Weiter bevorzugt handelt es sich bei dem Klebeband um ein beidseitig klebendes Klebeband. Noch weiter bevorzugt weist das Klebeband eine Schichtdicke von ≤ 200 µm auf. Während jedes dem Fachmann bekannte und geeignete Klebeband Verwendung finden kann, wird ein Klebeband auf Acrylatbasis bevorzugt. Ganz besonders bevorzugt handelt es sich bei dem Klebeband um ein Transferklebeband.

Weiter bevorzugt ist zwischen der Isolationsschicht und der Heizpolymerschicht zumindest eine weitere Schicht, insbesondere eine oder mehrere Schutzschichten, bevorzugt aus unterschiedlichen Materialien angeordnet. Als Schutzschicht kommt jedes dem Fachmann bekannte und geeignete Material in Betracht. Besonders bevorzugt ist hierbei auf der Heizpolymerschicht eine erste Schutzschicht angeordnet. Die erste Schutzschicht besteht weiter bevorzugt aus einem Lack, d.h. es handelt sich um eine Lackschicht. Besonders bevorzugt handelt es sich bei dem Lack um einen Lack bzw. einen Schutzlack auf Acrylatbasis. Noch bevorzugter handelt es sich bei dem Schutzlack um einen UV-härtenden Schutzlack. Zusätzlich ist weiter bevorzugt auf der ersten Schutzschicht, d.h. auf der dem Heizpolymer abgewendeten Seite der ersten Schutzschicht, eine zweite Schutzschicht angeordnet. Bei der zweiten Schutzschicht handelt es sich bevorzugt um eine Schutzschicht aus Polyethylennaphthalat (PEN) und/oder Polypropylen (PP). Die erste Schutzschicht, insbesondere in Form eines Schutzlacks, hat unter anderem den Vorteil, dass Unebenheiten in der Oberfläche der Heizpolymerschicht ausgeglichen werden, was zu einer besseren Kontaktierung der einzelnen Schichten des Heizelements führt und somit neben einer verbesserten Stabilität auch zu einem verbesserten Wärmetransfer führt. Die zweite Schutzschicht sorgt insbesondere für einen verbesserten mechanischen Schutz, d.h. für eine höhere Stabilität und Beständigkeit der erfindungsgemäßen Vorrichtung.

Erfindungsgemäß weist die Heizeinrichtung Eigenschaften eines PTC-Thermistors auf. Solche PTC-Thermistoren (*Positive Temperature Coefficient*) sind dem Fachmann wohlbekannt und werden auch als Kaltleiter bezeichnet. Hierbei handelt es sich um stromleitende Materialien, die den Strom bei tieferen Temperaturen besser leiten können als bei höheren. In anderen Worten vergrößert sich mit steigender Temperatur ihr elektrischer Widerstand. Charakteristisch für einen Kaltleiter ist es, dass der Widerstand nicht linear zur Temperatur ansteigt. Wie dem Fachmann bekannt ist, erhöht sich die Leistung des Kaltleiters bei sinkenden Temperaturen automatisch und führt so umgekehrt zu einer erhöhten Heizleistung. Ebenso wird die Leistung bei steigenden Temperaturen selbstständig zurückgefahren. Hierdurch wird eine Heizeinrichtung bereitgestellt, die eine hohe Effizienz und Wirtschaftlichkeit aufweist, weiterhin wird durch die zuvor beschriebene automatische Reduzierung der Heizleistung einer PTC-Heizeinrichtung (PTC-Effekt) wirksam eine Überhitzung vermieden, was zu einer erhöhten Sicherheit der Heizeinrichtung führt. Dies ist insbesondere für die Verwendung solcher Heizeinrichtungen in den Betriebsflüssigkeitsbehältern der vorliegenden Erfindung vorteilhaft. In einer besonders bevorzugten Ausführungsform weist die Heizpolymerschicht einer folienförmigen Heizeinrichtung der vorliegenden Erfindung einen PTC-Thermistor bzw. einen Kaltleiter auf.

Vorteilhafterweise kann die Maximaltemperatur des Kaltleiters in gewissen Grenzen und basierend auf dessen Aufbau bestimmt werden. In einer bevorzugten Ausführungsform liegt diese Maximaltemperatur in einem Bereich von ≥ 50°C und ≤ 100°C, bevorzugter in einem Bereich von ≥ 60°C bis ≤ 90°C und am bevorzugten in einem Bereich zwischen ≥ 70°C und ≤ 80°C.

Bevorzugt ist die Heizeinrichtung eine elektrisch betriebene Heizeinrichtung. Generell kann die Heizeinheit der vorliegenden Erfindung mit Gleichstrom oder Wechselstrom betrieben werden. Bevorzugt wird diese jedoch mit Gleichstrom betrieben.

Ein weiterer Vorteil des zuvor beschriebenen PTC-Effekts ist es, dass eine Regelung der Heizeinrichtung im Wesentlichen entfallen kann. Dementsprechend wird in einer bevorzugten Ausführungsform die den Kaltleiter aufweisende Heizeinrichtung nicht geregelt. Noch bevorzugter ist diese jedoch steuerbar ausgeführt. Hierbei ist die Heizeinrichtung bevorzugt direkt oder indirekt mit einem Temperatursensor verbindbar, wobei es sich noch bevorzugter um einen Temperatursensor zur Ermittlung der Umgebungstemperatur handelt, wie dieses regelmäßig in Kraftfahrzeugen zu finden ist. In einer besonders bevorzugten Ausführungsform ist das Heizelement mit einem Temperatursensor verbindbar oder mit diesem verbunden, und wird so angesteuert, dass es lediglich bei einer Außentemperatur bzw. einer Umgebungstemperatur von ≤ -10°C aktiviert wird. Hierdurch wird vorteilhafterweise ein komplettes Einfrieren der Betriebsflüssigkeit verhindert, bei höheren Temperaturen jedoch ein unnötiges Heizen vermieden. In anderen Worten wird das Heizelement nur bei einer niedrigen Umgebungstemperatur, bevorzugter bei einer Umgebungstemperatur von ≤ -10°C eingeschaltet bzw. aktiviert.

In einer besonders bevorzugten Ausführungsform weist der erfindungsgemäße Betriebsflüssigkeitsbehälter den folgenden Aufbau auf, wobei - ausgehend von der Außenseite der Betriebsflüssigkeitsbehälterwand - die Schichten des darauf angeordneten Heizelements einschließlich einer darauf angeordneten Isolation in ihrer Reihenfolge angegeben werden:
1) Betriebsflüssigkeitsbehälterwand.
2) Haftvermittlungsschicht, insbesondere Klebeband, weiter bevorzugt Transferklebeband.
3) Optionale Wärmeleitschicht bevorzugt Metallschicht, insbesondere Aluminium-, Silber- oder Kupferschicht. Bevorzugt Kupferschicht.
4) Substratschicht, bevorzugt PEN mit darauf angeordneten Elektroden, insbesondere Kupfer- oder Silberelektroden. Die Elektroden werden bevorzugt durch ein Ätzverfahren erzeugt.
5) Heizpolymerschicht, bevorzugt aus einer Mischung zumindest zweier Carbonlacke. Bevorzugt weist der zumindest erste Carbonlack eine PTC-Knicktemperatur bei ungefähr 60 °C auf und der zumindest zweite Carbonlack weist eine PTC-Knicktemperatur bei ungefähr 80 °C auf. Weiter bevorzugt beträgt das Mischverhältnis der zumindest zwei Carbonlacke 1:1.
6) erste Schutzschicht, insbesondere Schutzlack auf Acrylatbasis.
7) Optionale zweite Schutzschicht, insbesondere aus PEN und/oder PP.
8) Haftvermittlungsschicht, insbesondere Klebeband, weiter bevorzugt Transferklebeband.
9) Isolationsschicht, insbesondere aus einem PE- und/oder PU-Schaum
10) Metallfolie, insbesondere Aluminiumfolie.

In einer weiteren bevorzugten Ausführungsform ist die Heizeinrichtung mit einer Spannungsversorgung sowie einer Steuereinheit elektrisch verbunden, wobei die Steuereinheit eingerichtet ist, die Heizeinrichtung beim Unterschreiten einer bestimmten Temperatur, vorzugsweise beim Unterschreiten einer Temperatur von ≤ -10°C, einzuschalten. Die Steuereinheit kann weiterhin mit einem Temperatursensor, vorzugsweise einem Temperatursensor zur Ermittlung der Umgebungstemperatur des Kraftfahrzeugs elektrisch verbunden sein.

Insbesondere bei einer folienförmigen Heizeinrichtung mit dem zuvor beschriebenen Schichtaufbau und darin integrierten Elektroden ist vorteilhafterweise eine elektrische Kontaktierbarkeit dieser Heizeinrichtung an nahezu beliebiger Stelle möglich. Somit können Anschlüsse, wie z. B. Spannungsversorgung der Heizeinrichtung, sehr flexibel an dieser angeordnet werden.

Besonders bevorzugt wird bei einer in der Wandung des Betriebsflüssigkeitsbehälters angeordneter Heizeinrichtung und/oder einer innerhalb des Betriebsflüssigkeitsbehälters an der Wandung des Betriebsflüssigkeitsbehälters angeordneten Heizeinrichtung die elektrische Kontaktierung des Heizelements durch die Schweißnähte des Betriebsflüssigkeitsbehälters herausgeführt. Dies hat den Vorteil, dass die elektrische Kontaktierung nicht mit der Betriebsflüssigkeit in Kontakt kommt und somit nicht kostenaufwendig gegenüber dieser geschützt werden muss. Vorzugsweise besteht der Betriebsflüssigkeitsbehälter aus mehreren Teilen, die miteinander verschweißt werden, noch bevorzugter besteht er aus zwei miteinander verschweißten Halbschalen. Durch diese Verschweißung der einzelnen Schalen des Betriebsflüssigkeitsbehälters entstehen an den Kontaktflächen Schweißnähte.

In einer weiteren Ausführungsform wird ein Betriebsflüssigkeitsbehälter bereitgestellt aufweisend zumindest eine Komponente ausgewählt aus der Gruppe umfassend eine Förderpumpe, eine Filtereinrichtung, einen Qualitätssensor und/oder einen Füllstandsgeber und zumindest eine Heizeinrichtung, dadurch gekennzeichnet, dass die Heizeinrichtung innerhalb der Wandung des Betriebsflüssigkeitsbehälters angeordnet ist und, dass der elektrische Kontaktierung der Heizeinrichtung durch die Schweißnähte eines mehrschaligen Behälters herausgeführt werden.

Weitere Vorteile, Einzelheiten und Merkmale der Erfindung ergeben sich nachfolgend aus den erläuterten Ausführungsbeispielen. Dabei zeigen im Einzelnen:
- Figur 1:: eine schematische Ansicht eines Betriebsflüssigkeitsbehälters gemäß einer Ausführungsform der Erfindung, bei dem eine folienförmige Heizeinrichtung außerhalb des Betriebsflüssigkeitsbehälters an der Wandung des Betriebsflüssigkeitsbehälters angeordnet ist und eine Isolationsschicht aus PU-Schaum verwendet wurde;
- Figur 2:: eine schematische Ansicht eines Betriebsflüssigkeitsbehälters gemäß einer weiteren Ausführungsform der Erfindung, bei dem eine folienförmige Heizeinrichtung innerhalb der Wandung des Betriebsflüssigkeitsbehälters angeordnet ist und eine Isolationsschicht aus Aluminiumfolie verwendet wurde;
- Figur 3:: eine schematische Ansicht des Schichtaufbaus des erfindungsgemäßen Betriebsflüssigkeitsbehälters mit einer darauf aufgebrachten Heizeinrichtung und Isolation;
- Figur 4:: die Widerstandskurven von zwei Heizpolymeren sowie einer 1:1 Mischung derselben in Abhängigkeit von der Temperatur.

In der nun folgenden Beschreibung bezeichnen gleiche Bezugszeichen gleiche Bauteile bzw. gleiche Merkmale, so dass eine in Bezug auf eine Figur durchgeführte Beschreibung bezüglich eines Bauteils auch für die anderen Figuren gilt, so dass eine wiederholende Beschreibung vermieden wird.

Ferner wird in der folgenden Beschreibung auf einen, wässrige Harnstofflösung enthaltenden, SCR-Flüssigkeitsbehälter Bezug genommen, wobei die vorliegende Erfindung allgemein auf Betriebsflüssigkeitsbehälter, beispielsweise in Form eines Tanks für Wasser oder Dieselkraftstoff anwendbar ist.

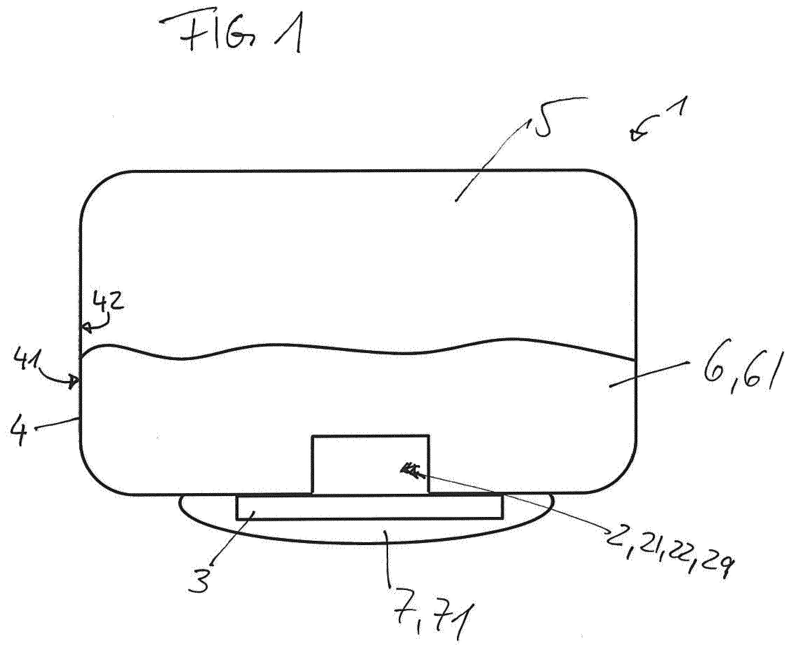

Figur 1 zeigt eine schematische Ansicht eines Betriebsflüssigkeitsbehälters gemäß einer ersten Ausführungsform der Erfindung. Der Betriebsflüssigkeitsbehälter (1) wurde im Spritzgussverfahren aus einem thermoplastischen Kunststoff hergestellt und in ein Kraftfahrzeug (nicht gezeigt) eingebaut.

Der Betriebsflüssigkeitsbehälter (1) wurde aus zwei Halbschalen zusammengesetzt, die miteinander verschweißt wurden. An den Kontaktstellen zwischen den beiden verschweißten Halbschalen sind Schweißnähte ausgebildet (nicht gezeigt).

In seinem Vorratsvolumen (5) bevorratet der Betriebsflüssigkeitsbehälter (1) die Betriebsflüssigkeit (6), die eine wässrige Harnstofflösung ist, welche bei einer Temperatur von etwa -11°C einfriert.

Der Betriebsflüssigkeitsbehälter (1) besitzt eine Wandung (4), die das Vorratsvolumen (5) einschließt. Diese Wandung weist eine innere Oberfläche (42) auf, die mit der Betriebsflüssigkeit (6, 61) in Kontakt steht. Des Weiteren weist die Wandung (4) des Betriebsflüssigkeitsbehälters (1) auch eine äußere Oberfläche (41) auf, die nicht mit der Betriebsflüssigkeit (6, 61) in Kontakt steht.

Der Betriebsflüssigkeitsbehälter (1) weist weiterhin ein Fördermodul (29) auf, welches als Komponenten (2) eine Filtereinrichtung (22) umfassend ein Filterelement geeignet zur Filterung der Betriebsflüssigkeit, sowie ein Fördermodul (29) geeignet zur Förderung der Betriebsflüssigkeit (6, 61) aus dem Betriebsflüssigkeitsbehälter (1) aufweist.

Der Betriebsflüssigkeitsbehälter (1) weist weiterhin eine Öffnung (8) in seiner Wandung (4) auf. Durch diese Öffnung wird die Betriebsflüssigkeit (6, 61) aus dem Betriebsflüssigkeitsbehälter (1) entnommen. Die Öffnung in im Bereich des Bodens des Betriebsflüssigkeitsbehälters (1) angeordnet, insbesondere an dessen tiefster Stelle.

Das zuvor beschriebene Fördermodul (29) mit seinen darin befindlichen Komponenten (2, 21, 22) ist in dieser Öffnung (8) angeordnet. Weiterhin ist zu erkennen, dass das Fördermodul (29) damit ebenfalls im Bereich des Bodens des Betriebsflüssigkeitsbehälters (1) angeordnet ist. Hierdurch ist gewährleistet, dass es an einer möglichst tiefliegenden Stelle des Betriebsflüssigkeitsbehälters (1) angeordnet ist und somit die Entnahme der Betriebsflüssigkeit (6, 61) zuverlässig erfolgen kann.

Ebenfalls im Bereich des Bodens des Betriebsflüssigkeitsbehälters (1) und im Bereich der Öffnungen (8) der Wandung des Betriebsflüssigkeitsbehälters (1) ist eine Heizeinrichtung (3) an der äußeren Oberfläche der Wandung (41) des Betriebsflüssigkeitsbehälters (1) angeordnet. Die Heizeinrichtung ist folienförmig und flexibel ausgeführt. Weiterhin umfasst die Heizeinrichtung einen PTC-Thermistor (Kaltleiter). Die folienförmige Heizeinrichtung (3) ist schichtförmig aufgebaut und umfasst insbesondere eine Substratschicht, die die äußere Oberfläche der Wandung (41) kontaktiert, gefolgt von einer Heizpolymerschicht umfassend den Kaltleiter, weiter gefolgt von einer Schutzschicht, welche oberhalb der Heizpolymerschicht angeordnet ist. Damit kann die folienförmige Heizeinrichtung (3) als gekapselte Heizeinrichtung bezeichnet werden.

Beachtenswert ist, dass die Heizeinrichtung nicht ausschließlich im Bereich der Öffnung (8) des Betriebsflüssigkeitsbehälters angeordnet ist. Es wird somit ein effektiveres Auftauen gewährleistet, insbesondere bei in Schräglage des KFZ eingefrorener Betriebsflüssigkeit.

Die Heizeinrichtung (3) wird elektrisch und mit Gleichstrom betrieben. Hierzu sind in der gekapselten folienförmigen Heizeinrichtung (3) Elektroden angeordnet, die die Heizpolymerschicht elektrisch kontaktieren.

Die Heizeinrichtung (3) ist so ausgeführt, dass deren Maximaltemperatur in einem Bereich von ≥ 70°C und ≤ 80°C liegt. Des Weiteren ist die Heizeinrichtung (3) nicht geregelt. Sie ist lediglich an ein Steuergerät angeschlossen, das über einen damit verbundenen Temperatursensor zur Bestimmung der Umgebungstemperatur die Heizeinrichtung derart ansteuert, dass diese lediglich dann aktiviert bzw. eingeschaltet wird, wenn die Umgebungstemperatur unterhalb von ungefähr -10°C liegt. Hiermit wird ein Einfrieren der wässrigen Harnstofflösung (61) wirkungsvoll vermieden, gleichzeitig aber auch gewährleistet, dass die Heizeinrichtung als elektrischer Verbraucher aktiviert wird, wenn dies nicht erforderlich ist.

Der Betriebsflüssigkeitsbehälter (1) weist weiterhin eine thermische Isolationsschicht (7) auf, die ebenfalls im Bereich des Bodens des Betriebsflüssigkeitsbehälters (1) angeordnet ist. Insbesondere wurde diese Isolationsschicht (7) über der Heizeinrichtung (3) aufgebracht und deckt diese vollständig ab. Mit Hilfe dieser thermischen Isolationsschicht (7), die im Bereich des Bodens des Betriebsflüssigkeitsbehälters (1), insbesondere im Bereich der Öffnung (8), d. h. der Entnahmestellung für die Betriebsflüssigkeit (6, 61) angeordnet ist, wird somit gewährleistet, dass die von der PTC-Heizeinrichtung (3) erzeugte Wärme effizient an den Betriebsflüssigkeitsbehälter (1) bzw. dessen Wandung (4) und letztendlich an die Betriebsflüssigkeit (6, 61) abgegeben wird. Die Isolationsschicht (7) besteht aus PU-Schaum, der unkompliziert auf die Heizeinrichtung (3) und die Wandung des Betriebsflüssigkeitsbehälters (4) aufgebracht wurde.

Die Heizeinrichtung (3) wurde durch ein Verkleben mit der Wandung des Betriebsflüssigkeitsbehälters (4) stoffschlüssig mit diesem verbunden. Vorteilhafterweise wird durch den zusätzlich aufgetragenen PU-Schaum (71) der Isolationsschicht (7) die Haftung der Heizeinrichtung (3) an der äußeren Oberfläche der Wandung (41) des Betriebsflüssigkeitsbehälters (1) noch verbessert.

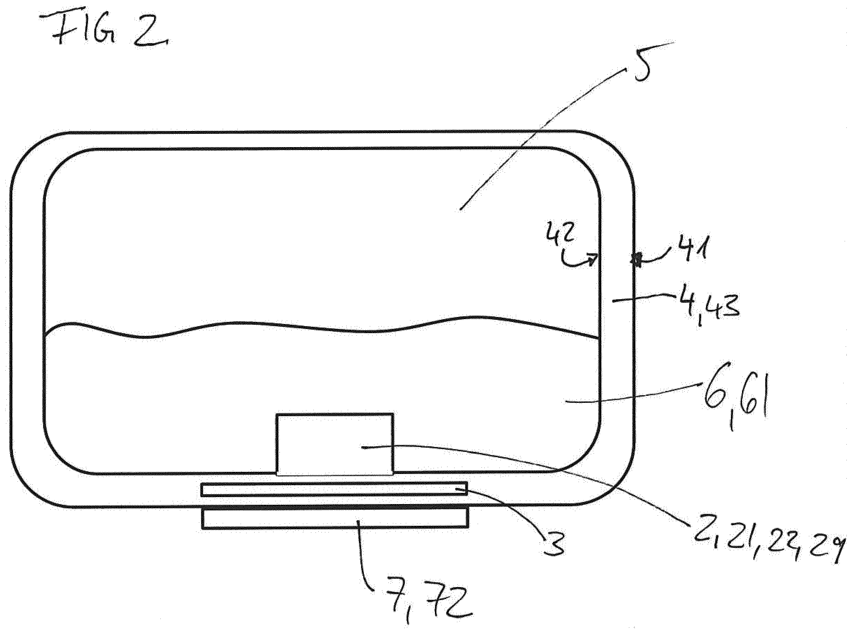

Figur 2 zeigt eine weitere Ausführungsform des Betriebsflüssigkeitsbehälters der vorliegenden Erfindung. Hierbei wurde die folienförmige Heizeinrichtung (3) innerhalb der Wandung des Betriebsflüssigkeitsbehälters (4) angeordnet

Die in Figur 2 dargestellte Ausführungsform der Erfindung entspricht im Wesentlichen der in Figur 1 dargestellten Ausführungsform. Unterschiede ergeben sich lediglich hinsichtlich der Wandung (4), der Anordnung der Heizeinrichtung (3) sowie der Isolationsschicht (7). Hierauf wird im Folgenden eingegangen, ohne die zuvor gemachten Ausführungen zu wiederholen.

Bezüglich der Wandung des Betriebsflüssigkeitsbehälters (4) ist dieser mehrschichtig ausgeführt und umfasst zumindest zwei Schichten aus einem thermoplastischen Kunststoff. Insbesondere wurde der Betriebsflüssigkeitsbehälter mittels Extrusionsblasformen hergestellt.

Die folienförmige Heizeinrichtung (3) des in Figur 2 gezeigten Betriebsflüssigkeitsbehälters (1) ist an einer ähnlichen Stelle, d. h. im Bodenbereich des Betriebsflüssigkeitsbehälters und nahe der Öffnung desselben angeordnet, ist jedoch zwischen der äußeren Oberfläche der Wandung (41) und der inneren Oberfläche der Wandung (42) positioniert. Durch diese Positionierung werden ebenfalls die oben beschriebenen Vorteile der Anordnung der Heizeinrichtung erreicht.

Auch bezüglich der Isolationsschicht (7) ergeben sich Unterschiede zu der in Figur 1 dargestellten Ausführungsform. Diese wird im Fall der Ausführungsform der Figur 2 aus einer Aluminiumfolie gebildet, die ebenfalls im Bereich des Bodens bzw. der Öffnung (8) des Betriebsflüssigkeitsbehälters (1) auf die äußere Oberfläche der Wandung (41) aufgeklebt wurde. Erneut wird durch diese Isolationsschicht (7, 72) eine verbesserte Effizienz der Heizleistung der Heizeinrichtung (3) gewährleistet.

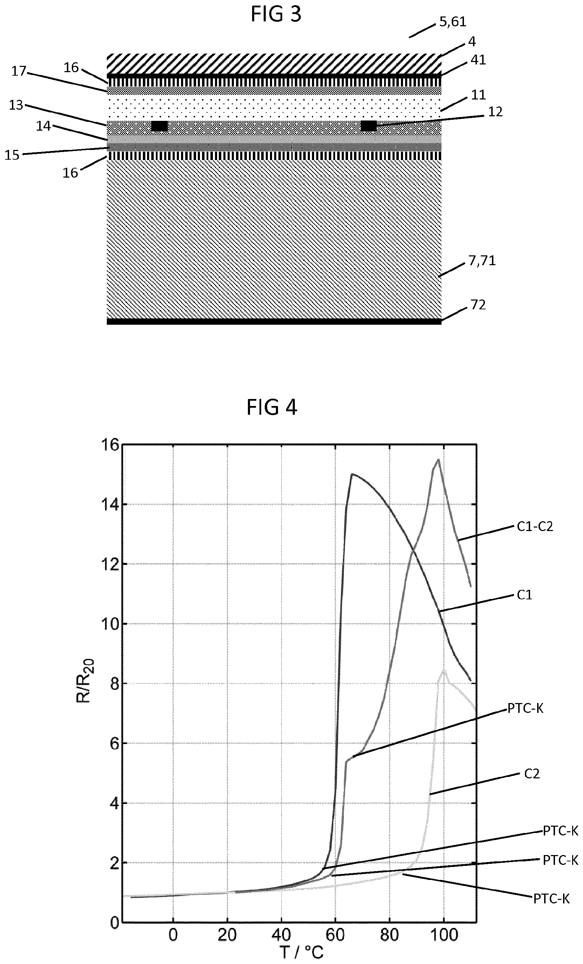

Figur 3 zeigt schematisch den Schichtaufbau des erfindungsgemäßen Betriebsflüssigkeitsbehälters mit einer darauf aufgebrachten Heizeinrichtung und Isolation. Dargestellt ist ein Querschnitt durch den unteren Bereich eines Betriebsflüssigkeitsbehälters, der in seinem Vorratsvolumen (5) wässrige Harnstofflösung (61) als Betriebsflüssigkeit aufweist. Der Betriebsflüssigkeitsbehälter weist eine Wandung (4) mit einer äußeren Oberfläche (41) auf. Im Folgenden werden die weiteren Schichten gemäß ihrer Reihenfolge ausgehend von der äußeren Oberfläche (41) der Betriebsflüssigkeitsbehälterwand beschrieben.

Auf die äußere Oberfläche (41) der Wandung des Betriebsflüssigkeitsbehälters (4) ist eine folienförmige Heizvorrichtung mit einer Isolationsschicht aufgebracht. Die folienförmige Heizvorrichtung wurde über eine erste Haftvermittlungsschicht (16), genauer ein Transferklebeband aufweisend einen druckempfindlichen Klebstoff, durch Anpressen auf die äußere Oberfläche der Wandung (4) aufgebracht.

Über der Haftvermittlungsschicht (16), d.h. auf der Seite der Haftvermittlungsschicht (16), welche von der äußeren Oberfläche der Wandung (41) weg weist, ist eine optionale Wärmleitschicht (17) angeordnet, welche aus Aluminium oder Kupfer gebildet wird und durch die ein effizienter Wärmetransport vom Heizelement zu der Wandung des Betriebsflüssigkeitsbehälters (4) gewährleistet wird.

Über der Wärmeleitschicht (17) ist die Substratschicht (11) angeordnet, die aus Polyethylennaphthalat (PEN) besteht. Auf dieser wiederum sind die Elektroden (12), die aus Kupfer bestehen angeordnet. Die Elektroden (12) wurden durch ein Ätzverfahren auf der Substratschicht gebildet.

Die Metallschicht (12) wird gefolgt von der Heizpolymerschicht (13) welche aus einer Mischung zweier Polymere auf Kohlenstoffbasis, insbesondere zweier Carbonlacke besteht. Der erste der beiden Carbonlacke weist einen PTC-Knick bei einer Temperatur von etwa 60 °C auf, der zweite der beiden Carbonlacke weist einen PTC-Knick bei einer Temperatur von etwa 100 °C auf. Die beiden Carbonlacke liegen in einem Mischverhältnis von ungefähr 1:1 vor. Die Elektroden kontaktieren die Heizpolymerschicht auf beiden Seiten (Durchkontaktierung).

Die Heizpolymerschicht (13) wird gefolgt von einer ersten Schutzschicht (14), die aus einem UV-härtendem Schutzlack auf Acrylatbasis besteht. Auf diese erste Schutzschicht (14) ist optional eine zweite Schutzschicht (15) aus Polyethylennaphthalat (PEN) oder Polypropylen (PP) aufgebracht.

Die Isolationsschicht (7) ist wiederum mittels einer Haftvermittlungsschicht (16), die ebenfalls aus einem Transferklebeband besteht, auf die erste, bzw. falls vorhanden zweite, Schutzschicht (14, 15) aufgebracht. Die Isolationsschicht (7) besteht aus einem alukaschierten Schaumstoff, d.h. auf den Schaumstoff ist weiterhin eine Aluminiumfolie (72) aufgebracht. Der Schaumstoff der Isolationsschicht ist ein geschlossenzelliger Schaumstoff und besteht aus Polyurethan (PU) .

Figur 4 zeigt die Widerstandskurven zweier Heizpolymeren sowie einer 1:1 Mischung derselben in Abhängigkeit von der Temperatur. Hierbei zeigt der Graph (C1) die Widerstandskurve des ersten Heizpolymers und der Graph (C2) die Widerstandskurve des zweiten Heizpolymers. Der Graph (C1-C2) zeigt die Widerstandskurve einer 1:1 Mischung der beiden Heizpolymere (C1,C2) auf. Diese Mischung wurde als Heizpolymerschicht (13) im erfindungsgemäßen Betriebsflüssigkeitsbehälter (1) eingesetzt, wie er beispielsweise in Figur 3 gezeigt ist. Bei beiden Heizpolymeren handelte es sich um Polymere auf Kohlenstoffbasis, insbesondere Carbonlacke. Wie zu erkennen ist, handelt es sich weiterhin bei beiden Carbonlacken um Kaltleiter, d.h. beide Carbonlacke weisen einen PTC-Effekt auf. Carbonlacke dieser Art sind dem Fachmann bekannt.

Wie ebenfalls aus Figur 4 zu entnehmen ist, weisen beide getesteten Carbonlacke einen PTC-Knick (PTC-K) auf. Dies bedeutet, dass bei Erreichen und/oder Überschreiten einer bestimmten Temperatur der elektrische Widerstand des betrachteten Carbonlacks mit weiter zunehmender Temperatur nicht mehr länger nur linear, sondern exponentiell zunimmt. Für den ersten Carbonlack (C1) liegt diese Temperatur bei etwa 60 °C, für den zweiten Carbonlack (C2) liegt diese Temperatur bei etwa 90 °C.

Wie weiterhin der Figur 4 zu entnehmen ist weist die 1:1 Mischung der beiden Carbonlacke (C1-C2) vorteilhafterweise zwei PTC-Knicke auf.

Die Messungen wurden mit zwei weiteren Carbonlacken und einer 1:1 Mischung derselben wiederholt wobei die PTC-Knicktemperatur des ersten Carbonlacks bei ungefähr 60 °C und die PTC-Knicktemperatur des zweiten Carbonlacks bei ungefähr 80 °C lag. Es wurden analoge Ergebnisse beobachtet.

### Bezugszeichenliste

- 1: Betriebsflüssigkeitsbehälter

- 2: Komponente
- 21: Förderpumpe
- 22: Filtereinrichtung
- 29: Fördermodul

- 3: Heizeinrichtung, folienförmige Heizeinrichtung

- 4: Wandung des Betriebsflüssigkeitsbehälters
- 41: Äußere Oberfläche der Wandung
- 42: Innere Oberfläche der Wandung
- 43: mehrschichtige Wandung

- 5: Vorratsvolumen

- 6: Betriebsflüssigkeit
- 61: wässrige Harnstofflösung

- 7: Isolationsschicht
- 71: PU-Schaum
- 72: Metallfolie, Aluminiumfolie

- 8: Öffnung in der Wandung

- 11: Substratschicht
- 12: Elektrode
- 13: Heizpolymerschicht
- 14: Erste Schutzschicht
- 15: Zweite Schutzschicht
- 16: Haftvermittlungsschicht
- 17: Wärmeleitschicht
- C1: erster Carbonlack
- C2: zweiter Carbonlack
- C1-C2: 1:1 Mischung von C1 mit C2
- PTC-K: PTC-Knick

## Patentansprüche

1. Betriebsflüssigkeitsbehälter (1) aufweisend zumindest eine Komponente (2) ausgewählt aus der Gruppe umfassend eine Förderpumpe (21), eine Filtereinrichtung (22), einen Qualitätssensor (23) und/oder einen Füllstandsgeber (24) und
zumindest eine Heizeinrichtung (3),
wobei die Heizeinrichtung folienförmig ist und
die Heizeinrichtung einen Kaltleiter aufweist,
**dadurch gekennzeichnet, dass**
die Heizeinrichtung außerhalb des Betriebsflüssigkeitsbehälters an der Wandung (4) des Betriebsflüssigkeitsbehälters angeordnet ist und zumindest teilweise von einem Schaum als Isolationsschicht bedeckt ist und/oder innerhalb der Wandung des Betriebsflüssigkeitsbehälters angeordnet ist.

2. Betriebsflüssigkeitsbehälter nach Anspruch 1, wobei das Heizelement im Bereich des Bodens des Betriebsflüssigkeitsbehälters angeordnet ist.

3. Betriebsflüssigkeitsbehälter nach Anspruch 1 oder 2, wobei die folienförmige Heizeinrichtung zumindest eine Substratschicht, eine Heizpolymerschicht, sowie eine Schutzschicht aufweist.

4. Betriebsflüssigkeitsbehälter nach zumindest einem der vorstehenden Ansprüche, wobei die Heizeinrichtung nicht geregelt wird.

5. Betriebsflüssigkeitsbehälter nach zumindest einem der vorstehenden Ansprüche, wobei die Maximaltemperatur der Heizvorrichtung in einem Bereich von ≥ 50°C und ≤ 100°C liegt.

## Claims

1. Operating fluid container (1) comprising at least one component (2) selected from the group comprising a feed pump (21), a filter device (22), a quality sensor (23) and/or a fill level sensor (24) and
at least one heating device (3),
the heating device being film-like and
the heating device having a PTC resistor,
**characterized in that**
the heating device is arranged outside the operating fluid container on the wall (4) of the operating fluid container and is at least partially covered by a foam as an insulation layer and/or is arranged inside the wall of the operating fluid container.

2. Operating fluid container according to claim 1, wherein the heating element is arranged in the region of the bottom of the operating fluid container.

3. Operating fluid container according to either claim 1 or claim 2, wherein the film-like heating device has at least one substrate layer, a heating polymer layer and a protective layer.

4. Operating fluid container according to at least one of the preceding claims, wherein the heating device is not controlled in a closed-loop manner.

5. Operating fluid container according to at least one of the preceding claims, wherein the maximum temperature of the heating device is in a range of ≥50°C and ≤100°C.

## Revendications

1. Réservoir de liquide fonctionnel (1) présentant au moins un composant (2) choisi dans le groupe comprenant une pompe d'alimentation (21), un dispositif de filtrage (22), un capteur de qualité (23) et/ou un capteur de niveau (24) et
au moins un dispositif de chauffage (3),
dans lequel le dispositif de chauffage est en forme de film et
le dispositif de chauffage présente une thermistance CTP,
**caractérisé en ce que**
le dispositif de chauffage est disposé à l'extérieur du réservoir de liquide fonctionnel sur la paroi (4) du réservoir de liquide fonctionnel et est au moins partiellement recouvert d'une mousse en tant que couche isolante et/ou est disposé à l'intérieur de la paroi du réservoir de liquide fonctionnel.

2. Réservoir de liquide fonctionnel selon la revendication 1, dans lequel l'élément chauffant est disposé dans la zone du fond du réservoir de liquide fonctionnel.

3. Réservoir de liquide fonctionnel selon la revendication 1 ou 2, dans lequel le dispositif de chauffage en forme de film présente au moins une couche de substrat, une couche de polymère chauffant et une couche protectrice.

4. Réservoir de liquide fonctionnel selon au moins l'une des revendications précédentes, dans lequel le dispositif de chauffage n'est pas régulé.

5. Réservoir de liquide fonctionnel selon au moins l'une des revendications précédentes, dans lequel la température maximale du dispositif de chauffage est comprise dans une plage de ≥ 50 °C à ≤ 100 °C.
